# EUROPÄISCHE PATENTSCHRIFT

(11) **EP 0 877 687 B1**
(45) Veröffentlichungstag und Bekanntmachung des Hinweises auf die Patenterteilung: **01.03.2000**
(21) Anmeldenummer: 96945877.7
(22) Anmeldetag: 13.11.1996
(51) Int. Cl.: B60T 8/36, B60T 8/50, F16K 31/06

(54) **ELEKTROMAGNETISCH BETÄTIGTES VENTIL, INSBESONDERE FÜR HYDRAULISCHE BREMSANLAGEN VON KRAFTFAHRZEUGEN**
ELECTROMAGNETICALLY-OPERATED VALVE, ESPECIALLY FOR VEHICLE HYDRAULIC BRAKE SYSTEMS
SOUPAPE A ACTIONNEMENT ELECTROMAGNETIQUE S'UTILISANT NOTAMMENT POUR SYSTEMES DE FREINAGE HYDRAULIQUES D'AUTOMOBILES

(30) Priorität: 07.02.1996 DE 19604316
(43) Veröffentlichungstag der Anmeldung: 18.11.1998
(73) Patentinhaber: ROBERT BOSCH GMBH, 70442 Stuttgart (DE)
(72) Erfinder: HOHL, Günther, D-70569 Stuttgart (DE)
(86) Internationale Anmeldenummer: DE9602160
(87) Internationale Veröffentlichungsnummer: WO9728998

(56) Entgegenhaltungen:
- EP-A- 0 423 755
- WO-A-93/08051
- DE-A- 3 126 246
- DE-A- 3 802 648
- DE-A- 3 903 483
- DE-A- 4 119 662
- DE-A- 4 412 648

## Beschreibung

### Stand der Technik

Die Erfindung geht aus von einem elektromagnetisch betätigten Ventil nach der Gattung des Patentanspruchs 1.

In schlupfgeregelten hydraulischen Bremsanlagen finden Ventile Verwendung, welche in ihrer elektromagnetbetätigten Schließstellung sehr hohen hydraulischen Öffnungskräften unterworfen sind. Der elektromagnetische Kreis dieser Ventile muß daher in der Ventilschließstellung eine Zuhaltekraft auf den Magnetanker aufbringen, welche größer ist als die maximale hydraulische Öffnungskraft zuzüglich der Kraft einer Rückstellfeder. Ein derart ausgelegter Magnetkreis benötigt einen entsprechenden Einbauraum und verhindert neben weiteren Nachteilen die Anordnung derartiger Ventile in raumsparender, dichter Packung.

Aus DE 31 26 246 A 1 ist ein gattungsgemäßes Ventil bekannt, bei dem zur Verringerung der Zuhaltekraft durch am Stößel wirksamen Druckausgleich ein relativ kurzer Stift im ventildomseitigen Endabschnitt des durch den Magnetanker hindurchgeführten und mit diesem formschlüssig vereinigten Stößels lenkbewegbar in einer Längsbohrung desselben angeordnet ist. Eine vom zuströmseitigen Druck auf den Stift hervorgerufene Kraft wird daher über den Ventildom auf das Ventilgehäuse abgeleitet. Diese Maßnahme erlaubt es, den Magnetkreis kleiner zu dimensionieren. Funktionsmäßig ist das bekannte Ventil ein 2/2-Wegeventil, welches lediglich zwei Schaltstellungen aufweist, in denen entweder der volle Durchlaßquerschnitt eines Sitzventils freigegeben oder völlig gesperrt wird. Dies mindert die Verwendungsmöglichkeit für derartige Ventile. Außerdem sind ihre erheblichen Schaltgeräusche vielfach von Nachteil.

### Vorteile der Erfindung

Das erfindungsgemäße Ventil mit den kennzeichnenden Merkmalen des Patentanspruchs 1 hat demgegenüber den Vorteil, daß sich dieses, ähnlich einem Proportionalventil, durch Steuerung der Magnetkraft bei kleinen Hüben in beliebig viele Zwischenstellungen überführen läßt, ohne jedoch den aufwendigen Aufbau eines Proportionalventiles aufzuweisen. Diese Wirkungsweise ist darauf zurückzuführen, daß die Rückstellfeder im wesentlichen den Verlauf der am Stößel angreifenden Kraft über den Ventilhub bestimmt, während die am Schließglied wirkende hydraulische Kraft aufgrund der Durchmesserverhältnisse von Zuströmbohrung und Dichtdurchmesser des Ventilsitzes sowie der Kraftableitung auf den Ventildom nur einen untergeordneten Einfluß hat. Mit dem erfindungsgemäßen Ventil ist daher eine weitgehend kontinuierliche Durchflußsteuerung erzielbar. Es kann in vielen Anwendungsfällen anstelle von Proportionalventilen eingesetzt werden. Bei schlupfgeregelten Bremsanlagen ist durch die Anwendung des erfindungsgemäßen Ventils eine höhere Regelgüte und eine geringere Geräuschemission als bei dem bekannten Ventil zu erzielen.

Durch die in den Unteransprüchen aufgeführten Maßnahmen sind vorteilhafte Weiterbildungen und Verbesserungen des im Patentanspruch 1 angegebenen Ventils möglich.

Mit den in den Ansprüchen 2 und 3 gekennzeichneten vorteilhaften Ausgestaltungen wird nach dem Öffnen des Ventils eine definierte Ablösung des Druckmittelstrahls vom Schließglied bzw. vom Ventilsitz erreicht. Instabile Strömungskräfte werden somit weitgehend vermieden.

Die im Anspruch 4 angegebene vorteilhafte Weiterbildung der Erfindung hat den Vorteil, daß ein von Schließglied und Ventilsitz abgelöster Druckmittelstrahl im weiteren Verlauf nicht mehr auf den Stößel trifft. Störende Einflüsse durch Strömungskräfte werden hierdurch ausgeschaltet.

Mit der im Anspruch 5 gekennzeichneten vorteilhaften Ausgestaltung der Erfindung ist es auf einfache Weise möglich, die Federkraft der Rückstellfeder beispielsweise in der Schließstellung des Sitzventils durch Einstellen der Position der Hülse relativ zum Stößel zu justieren.

### Zeichnungen

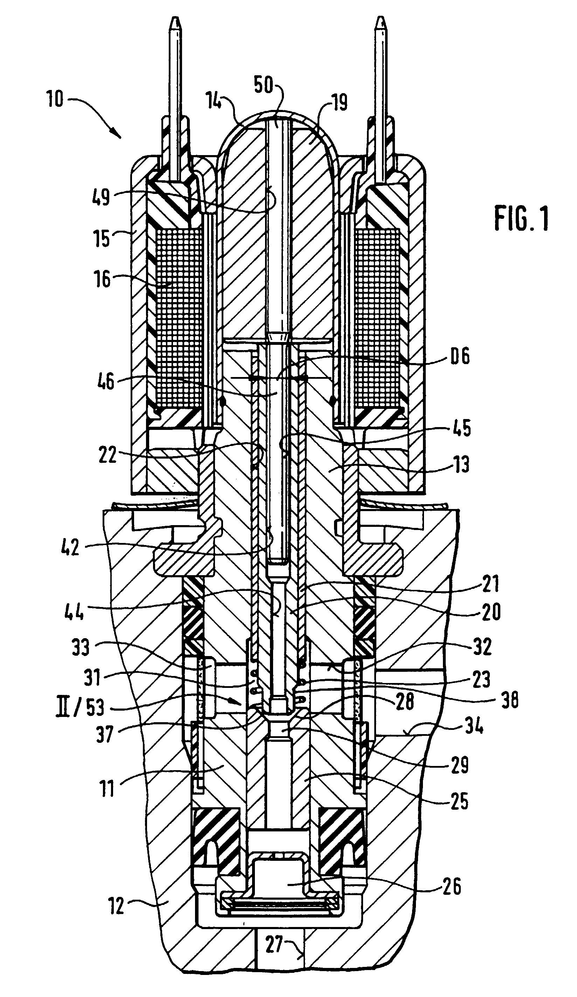

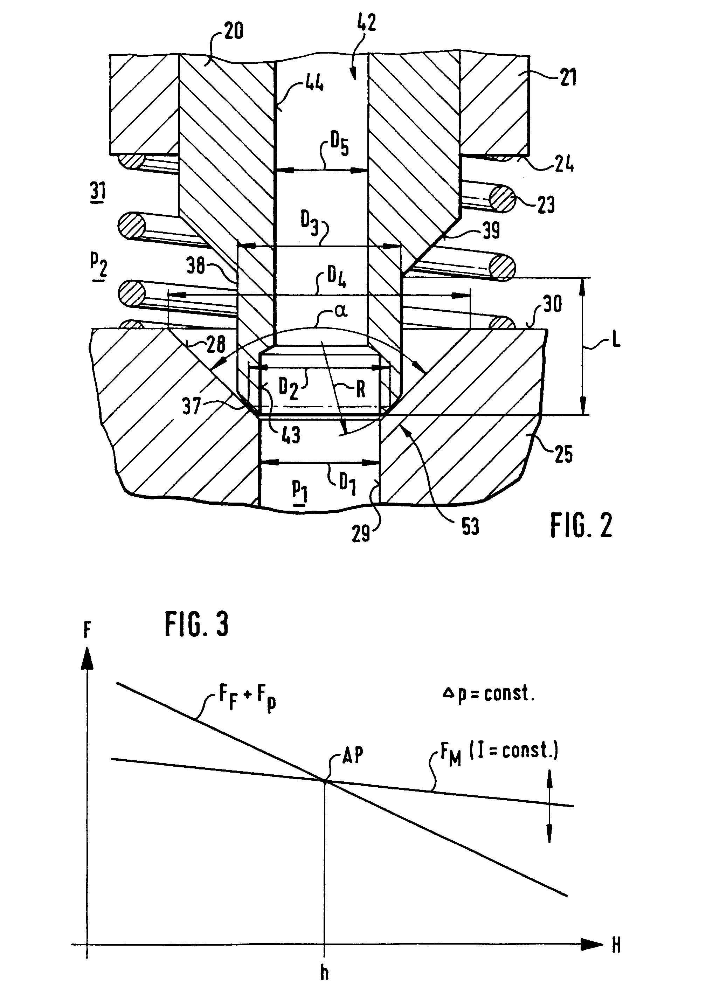

Eine Ausführungszeichnung der Erfindung ist in den Zeichnungen vereinfacht dargestellt und in der nachfolgenden Beschreibung näher erläutert. Es zeigen Figur 1 einen Längsschnitt eines elektromagnetisch betätigten Ventils mit einem Sitzventil, Figur 2 als Einzelheit II aus Figur 1 das in Schließstellung befindliche Sitzventil in gegenüber Figur 1 vergrößertem Maßstab und Figur 3 ein Diagramm der im Sitzventil über den Ventilöffnungshub wirkenden Kräfte.

### Beschreibung des Ausführungsbeispiels

Ein in Figur 1 der Zeichnung dargestelltes elektromagnetisch betätigtes Ventil 10 hat ein Ventilgehäuse 11, mit dem es in einem Ventilblock 12 aufgenommen ist. Außerhalb des Ventilblocks 12 ist das Ventilgehäuse 11 in einem Polkern 13 fortgesetzt. Auf dem Polkern 13 ist ein hülsenförmiger Ventildom 14 druckdicht befestigt. Auf diesen sowie den Polkern 13 ist eine von einem magnetflußleitenden Gehäuse 15 umhüllte, ringförmige Magnetspule 16 aufgesteckt.

Im Ventildom 14 befindet sich ein längsbewegbarer Magnetanker 19. Dieser greift an einem Stößel 20 an, auf den eine Hülse 21 aufgepreßt ist. Der Stößel 20 und die Hülse 21 sind in einer Längsbohrung 22 von Polkern 13 und Ventilgehäuse 11 längsbewegbar aufgenommen. Eine Rückstellfeder 23 greift ankerabgewandt an einer stirnseitigen Stützfläche 24 der Hülse 21 an (Figur 2).

Die Rückstellfeder 23 ist an einem in das Ventilgehäuse 11 eingepreßten, längsdurchbohrten Ventilkörper 25 abgestützt. Dieser steht mit einem Druckmitteleinlaß 26 des Ventils 10 in Verbindung, welcher mit einer Leitungsbohrung 27 des Ventilblocks 12 kommuniziert.

Der Ventilkörper 25 weist stößelseitig einen hohlkegelförmigen Ventilsitz 28 mit einem Kegelwinkel a von höchstens 90° auf (Figur 2). In den Ventilsitz 28 mündet zentrisch eine mit dem Druckmitteleinlaß 26 in Verbindung stehende Zuströmbohrung 29 mit dem Durchmesser D₁. Der Ventilsitz 28 endet radial außen scharfkantig an einer Stützfläche 30, welche den Ventilkörper 25 gegen eine Ventilkammer 31 begrenzt und rechtwinklig zu einer Achse verläuft, in welcher der Ventilkörper 25, der Ventilsitz 28, der Stößel 20 mit Hülse 21 und der Magnetanker 19 liegen. Die Ventilkammer 31 steht mit einer Querbohrung 32 in Verbindung, welche den Druckmittelauslaß 33 des Ventils 10 bildet und mit einer Leitungsbohrung 34 des Ventilblocks 12 kommuniziert. Die Längsbohrung 22 und der Ventildom 14 stehen mit der Ventilkammer 31 in druckmittelleitender Verbindung. Der Magnetanker 19 und der Stößel 20 mit Hülse 21 sind daher druckmittelumspült.

Mit dem Ventilsitz 28 wirkt ein Schließglied 37 in der Form einer Kugelschicht zusammen. Das Schließglied 37 ist stirnseitig an einem im Durchmesser verringerten zylindrischen Abschnitt 38 des Stößels 20 in der Ventilkammer 31 ausgebildet. Der Kegelwinkel α des Ventilsitzes 28 und der Radius R des Schließglieds 37 sind derart aufeinander abgestimmt, daß der Dichtdurchmesser D₂ des Ventilsitzes dem Durchmesser D₁ der Zuströmbohrung 29 entspricht oder geringfügig größer ist. Der Durchmesser D₃ des Stößelabschnitts 38 entspricht demgegenüber wenigstens annähernd dem Dichtdurchmesser D₂ des Ventilsitzes 28, d. h. der Stößelabschnitt 38 ist geringfügig größer als der Dichtdurchmesser. Der Übergang des Schließgliedes 37 zum Stößelabschnitt 38 ist scharfkantig ausgebildet. Der Stößelabschnitt 38 hat einschließlich des Schließgliedes 37 eine axiale Länge L, welche wenigstens dem Dichtdurchmesser D₂ des Ventilsitzes 28 entspricht. Der Stößelabschnitt 38 geht nach einem Übergangsabschnitt 39 mit dem Ventilsitz 28 entsprechender Konizität in den Stößel 20 über. Außerdem ist in Figur 2 zu erkennen, daß der Auslauf des Ventilsitzes 28 in der Stirnfläche 30 einen Durchmesser D₄ hat, der wenigstens dem zweifachen des Dichtdurchmessers D₂ des Ventilsitzes entspricht.

In der gemeinsamen Achse von Magnetanker 19, Stößel 20 und Ventilkörper 25 geht vom Schließglied 37 eine den Stößel in seiner vollen Länge durchdringende Längsbohrung 42 aus. Ventilkörperseitig hat die Längsbohrung 42 zunächst einen axial kurzen, ersten Bohrungsabschnitt 43, dessen Durchmesser gleich dem Durchmesser D₁ der Zuströmbohrung 29 des Ventilkörpers 25 ist (Figur 2). Gegen den Magnetanker 19 geht der erste Bohrungsabschnitt 43 in einen zweiten Abschnitt 44 der Längsbohrung 42 über. Dieser hat einen gegenüber dem ersten Bohrungsabschnitt 43 verringerten Durchmesser D₅. Auf den Abschnitt 44 folgend ist die Längsbohrung 42 in einem ankerseitigen, dritten Bohrungsabschnitt 45 fortgesetzt, dessen Durchmesser D₆ (Figur 1) größer als der Durchmesser D₅, jedoch kleiner oder gleich dem Durchmesser D₁ der Zuströmbohrung 29 ist. Im Bohrungsabschnitt 45 ist ein erster Stift 46 längsbewegbar aufgenommen. Der Stift 46 erstreckt sich einerseits bis nahe an den zweiten Bohrungsabschnitt 44, andererseits reicht er an den Magnetanker 19 heran. Durch eine sehr enge Tolerierung und hohe Oberflächengüte von Bohrungsabschnitt 45 und Stift 46 besteht ein sehr geringes Spiel zwischen den beiden Bauteilen. Die Passung zwischen dem Stift 46 und dem Bohrungsabschnitt 45 ist daher als leckagearm anzusehen und dadurch weitgehend druckdicht. Außerdem besteht der Stift 46 aus einem Werkstoff mit höherem Temperaturausdehnungskoeffizienten als demjenigen des Stößelwerkstoffs. Bei Temperaturänderungen bleibt daher die Leckage zwischen den beiden Teilen weitgehend gleich.

Die Längsbohrung 42 des Stößels 20 findet in einer achsgleich verlaufenden, durchgehenden Längsbohrung 49 des Magnetankers 19 ihre Fortsetzung. In der Längsbohrung 49 ist ein zweiter Stift 50 aufgenommen. Dieser ist, wie in der Figur 1 dargestellt, mit seinem einen Ende stirnwandseitig am Ventildom 14 abgestützt. Mit seinem anderen Ende greift der Stift 50 am Stift 46 des Stößels 20 kraftschlüssig an. Die Passung zwischen dem zweiten Stift 50 und der Längsbohrung 49 des Magnetankers 19 kann größeres Spiel aufweisen als zwischen dem ersten Stift 46 und dem Stößel 20.

Abweichend vom Ausführungsbeispiel können der Magnetanker 19 und der Stößel 20 auch nur von einem einzigen Stift durchdrungen sein.

Der Ventilsitz 28 des Ventilkörpers 25 und das Schließglied 37 des Stößels 20 bilden ein Sitzventil 53, welches aufgrund der Wirkung der Rückstellfeder 23 bei fehlender Bestromung der Magnetspule 16 seine Durchlaßstellung einnimmt. Bestromt ist das Ventil 10 in die Schließstellung des Sitzventils 41 umschaltbar. Das elektromagnetisch betätigte Ventil 10 ist somit ein Schaltventil in der Form des 2/2-Wegeventils. Es ist in hydraulischen Bremsanlagen von Kraftfahrzeugen verwendbar, wie sie in der Druckschrift DE 41 19 662 A1 hinsichtlich Schaltbild und Funktion ausführlich beschrieben sind. Bei einer solchen Verwendung ist der Druckmitteleinlaß 26 des Ventils 10 mit einem Hauptbremszylinder als Druckerzeuger der Bremsanlage und der Druckmittelauslaß 33 mit einer Radbremse als Druckverbraucher verbunden.

Herkömmliche Schaltventile unterscheiden sich vom erfindungsgemäßen Ventil beispielsweise dadurch, daß beim Sitzventil Kegelwinkel a größer als 90° gewählt werden, um als Schließglied 37 Kugeln größeren Durchmessers verwenden zu können, weil diese bei der Montage am Stößel 20 leichter handhabbar sind. Ferner strebt man beim herkömmlichen Sitzventil an, den Übergang zwischen der Kugelfläche des Schließglieds 37 und dem Stößel 20 kantenfrei zu gestalten. Schließlich ist der Magnetkreis beim herkömmlichen Ventil derart ausgelegt, daß die Magnetkraft beim Übergang in die Schließstellung zunehmend steiler ansteigt.

Das erfindungsgemäße Ventil 10 zeichnet sich demgegenüber in folgender Weise aus:

In der Schließstellung des Sitzventils 53 wirkt der zuströmseitige Druck p₁ auf eine vom Dichtdurchmesser D₂ umschriebene Wirkfläche, welche sich aus einer dem Schließglied 37 zugeordneten Kreisringfläche D₂ -D₁ des Stößelabschnitts 38 und der ventilsitzseitigen Stirnfläche des Stiftes 46 im Stößel 20 zusammensetzt. Die vom Druck p₁ auf den Stift 46 ausgeübte Kraft wird über den Stift 50 des Magnetankers 19 auf den Ventildom 14 abgeleitet. Dagegen übt der auf die erwähnte Kreisringfläche D₂ - D₁ wirkende Druck p₁ eine öffnende Kraft auf den Stößel 20 aus. Diese Kraft ist wegen der geringen Größe der Kreisringfläche D₂ - D₁ vergleichsweise klein. Der abströmseitige, in der Ventilkammer 31 und im Ventildom 14 herrschende Druck p₂ wirkt auf eine Kreisringfläche D₂ - D₁ an der ankerseitigen Stirnfläche des Stößels 20 und erzeugt eine schließend auf den Stößel wirkende Kraft. Da der Druck p₂ niedriger ist als der Druck p₁, wirkt die aus diesen beiden Kräften resultierende hydraulische Kraft Fₚ somit auf den Stößel 20 öffnend. Mit einer Kraft F_{F} öffnend auf den Stößel 20 wirkt auch die als Schraubendruckfeder ausgebildete, vorgespannte Rückstellfeder 23.

Beim Öffnen des Sitzventils 53 aus seiner Schließstellung heraus dringt das niedrigere Druckniveau p₂ in geringem Maße in Richtung auf die Zuströmbohrung 29 vor. Da diese aber nahezu dem Dichtdurchmesser D₂ des Ventilsitzes 28 entspricht und die Kreisringfläche D₂ -D₁ nur eine geringe radiale Ausdehnung hat, kommt es nicht zu einer wesentlichen Verringerung der von dem Druck p₁ auf die Wirkfläche des Stößelabschnitts 38 ausgeübten öffnenden Kraft. Unter der Vorausetzung einer konstanten Druckdifferenz zwischen p₁ und p₂ nimmt daher die resultierende hydraulische Kraft Fₚ über den zunehmenden Ventilöfffnungshub H nur mit betragsmäßig geringer negativer Steigung monoton fallend ab. Da, wie vorausgehend dargelegt, die resultierende hydraulische Kraft Fₚ auch nur vergleichsweise niedrige Werte annehmen kann, kommt daher für die Kräftebilanz am Stößel 20 der Rückstellfeder 23 eine wesentliche Bedeutung zu. Weil die Rückstellfeder 23 eine relativ hohe Federsteifigkeit besitzt, fällt die Federkraft F_{F} mit zunehmendem Ventilöffnungshub H mit betragsmäßig großer negativer Steigung monoton ab. Beim Schließen des Sitzventils 53 kehren sich sich die Verhältnisse entsprechend um.

Der Verlauf der additiv miteinander verknüpften Kräfte Fₚ + F_{F} über den Ventilöffnungshub H ist in Figur 3 in einem Diagramm angegeben, in welchem der Abszisse der Hub H und der Ordinate die Kraft F zugeordnet sind. Die Kennlinie dieser Summenkraft hat eine betragsmäßig relativ große negative Steigung. Da dies im wesentlichen von der Charakteristik der Rückstellfeder 23 abhängt und weniger von der Änderung der hydraulischen Kraft Fₚ über dem Ventilöffnungshub H, ist es für die erfindungsgemäße Funktion des Ventils 10 erforderlich, die Federkraft sehr genau einzustellen. Dies kann dadurch geschehen, daß bei am Ventilsitz 28 angreifenden Stößelabschnitt 38 die Hülse 21 relativ zum Stößel 20 verschoben wird, bis die beim Hub Null des Sitzventils 41 erforderliche Größe der Federkraft erreicht ist. Aufgrund der Preßverbindung zwischen dem Stößel 20 und der Hülse 21 ist diese Einstellung dauerhaft vorgenommen.

Die Formgebung des Sitzventils 53 stellt sicher, daß der im Diagramm wiedergegebene Kennlinienverlauf Fₚ + F_{F} weitgehend frei von Störeinflüssen ist. So wird durch den relativ kleinen Kegelwinkel α des Ventilsitzes 28 eine geringe Umlenkung der Druckmittelstrahlen im Sitzventil 53 erreicht. Dadurch werden wenig Impulskräfte hervorgerufen, die insbesondere bei großen Durchflüssen auftreten. Die Abhängigkeit der Ventileigenschaften von Differenzdruck und Temperatur des Druckmittels ist daher gering. Ferner ist durch den scharfkantigen Übergang zwischen dem Schließglied 37 und dem Stößelabschnitt 38 sichergestellt, daß die Druckmittelströmung stets dort abreißt und somit zu gleichmäßigen Strömungskräften auf das Schließglied 37 führt. Zu einer stabilen Druckmittelströmung trägt auch der scharfkantige Auslauf des Ventilsitzes 28 an der Stirnfläche 30 des Ventilkörpers 25 bei. Die Wirkung der Druckmittelströmung auf die Windungen der Rückstellfeder 23 ist daher weitgehend frei von störenden Einflüssen. Ferner schließt der axial zurückgesetzte Übergangsabschnitt 39 ein Auftreffen von Druckmittelstrahlen auf den Stößel 20 weitgehend aus.

Der erwähnten hydraulischen Kraft Fₚ und der Federkraft F_{F} ist die durch Erregen der Magnetspule 16 erzeugte, in Schließrichtung des Sitzventils 53 wirkende Magnetkraft F_{M} entgegengerichtet. Die Magnetkraft F_{M} muß wenigestens eine Größe erreichen, um das Sitzventil 53 entgegen der relativ kleinen hydrdaulischen Kraft Fₚ und der demgegenüber großen Federkraft F_{F} in die Schließstellung zu überführen und in dieser zu halten. Wie die Kennlinie der Magnetkraft F_{M} im Diagramm nach Figur 3 zeigt, ist durch den Fachmann geläufigen Maßnahmen bei der Gestaltung des Magnetkreises erreicht, daß bei einem bestimmten Erregerstrom I = konstant die Magnetkraft F_{M} über dem Ventilöffnungshub H ebenfalls einen monoton fallenden Verlauf nimmt, jedoch mit betragsmäßig geringerer negativer Steigung als ihn der Kraftverlauf Fₚ + F_{F} aufweist. Die flache Neigung der Kennlinie F_{M} ist beispielsweise durch entsprechende Ausbildung des Magnetkreises erzielbar, insbesondere wenn in der Schließstellung des Ventils 10 ein relativ großer Restluftspalt zwischen dem Magnetanker 19 und dem Polkern 13 verbleibt oder der Magnetanker und der Polkern als Tauchstufe ausgebildet sind. Die dargestellte Magnetkraft-Kennlinie ist für einen bestimmten Erregerstrom I = konstant repräsentativ. Durch abweichende Erregerströme sind in Richtung der Ordinate verlagerte Kennlinien erzeugbar. Geänderte Erregerströme sind durch Stromsteuerung, Pulsweitenmodulation und andere bekannte Verfahren einstellbar.

Die beiden Kennlinien Fₚ + F_{F} sowie F_{M} schneiden sich im Diagramm in einem Punkt, in dem Gleichgewicht zwischen der öffnenden hydraulischen Kraft Fₚ sowie der Federkraft F_{F} einerseits und der schließenden Magnetkraft F_{M} andererseits herrscht. Dieser Punkt ist als Arbeitspunkt AP bezeichnet, in dem das Sitzventil 41 beim Hub h eine stabile Stellung einnimmt. Eine in Richtung des Doppelpfeils im Diagramm durch Stromsteuerung verlagerte Magnetkraft-Kennlinie legt den Arbeitspunkt auf einen anderen Ventilöffnungshub. Das erfindungsgemäße Ventil 10 ist daher trotz seiner Bauform als Schaltventil ähnlich einem Proportionalventil stromabhängig mit variablem Öffnungshub stufenlos steuerbar. Diese Steuerbarkeit ist zumindest bei kleinen Ventilöffnungshüben gegeben.

Das erfindungsgemäße Ventil 10 ist in hydraulischen Bremsanlagen von Kraftfahrzeugen verwendbar, beispielsweise zur Bremsschlupf- oder Antriebsschlupfregelung oder in Bremsanlagen mit einer hydraulischen Servodruckquelle zur direkten Einsteuerung von Bremsdruck in Radbremszylinder. Mit dem Ventil 10 ist, in vorteilhafter Weise eine stufenlose Druck- und Volumenstromregelung möglich, wenn die Bremsanlage mit entsprechenden Sensoren und einer Regelelektronik ausgestattet ist. Auch ist das Ventil 10 als Druckbegrenzungsventil verwendbar, indem durch Stromsteuerung der Ansprechdruck eingestellt wird, entweder auf konstante oder anwendungsabhängige, veränderbare Werte.

## Patentansprüche

1. Elektromagnetisch betätigtes Ventil (10), insbesondere für hydraulische Bremsanlagen von Kraftfahrzeugen, mit den folgenden Merkmalen:
- es ist ein Sitzventil (53) zwischen einem Druckmitteleinlaß (26) und einem Druckmittelauslaß (33) vorgesehen
- das Sitzventil (53) hat ein Schließglied (37) und einen hohlkegelförmigen Ventilsitz (28), in den zentrisch eine mit dem Druckmitteleinlaß (26) in Verbindung stehende Zuströmbohrung (29) mit einem nahezu dem Dichtdurchmesser (D₂) des Ventilsitzes entsprechenden Durchmesser (D₁) mündet,
- das Schließglied (37) ist mit scharfkantigem Übergang an der Stirnseite eines Stößels (20) ausgebildet,
- am Stößel (20) greifen ein schließend auf das Sitzventil (53) wirkender Magnetanker (19) und wenigstens mittelbar eine öffnend wirkende Rückstellfeder (23) an,
- die von der Rückstellfeder (23) herrührende Kraft (F_{F}) am Schließglied (37) ist derart abgestimmt, daß sie einen mit zunehmendem Ventilöffnungshub (h) monoton fallenden Verlauf aufweist,
- der Magnetkreis des Ventils (10) ist derart ausgebildet, daß die auf den Magnetanker (19) ausgeübte, auf das Schließglied (37) übertragene Magnetkraft (F_{M}) stufenlos veränderbar ist und einen mit zunehmendem Ventilöffnungshub (h) monoton fallenden Verlauf hat,
- der Magnetanker (19) ist in einem Ventildom (14) angeordnet, der druckmittelleitend mit dem Druckmittelauslaß (33) in Verbindung steht,
- der Stößel (20) hat eine vom Schließglied (37) ausgehende Längsbohrung (42), in der ein an einer Wand des Ventildoms (14) wenigstens mittelbar abgestützter, längsbewegbarer Stift (46) weitgehend druckdicht aufgenommen ist, dessen Querschnitt wenigstens annähernd dem Querschnitt der Zuströmbohrung (29) entspricht,
gekennzeichnet durch die weiteren Merkmale:
- der Kegelwinkel (α) des Ventilsitzes (28) beträgt höchstens 90°,
- das Schließglied (37) hat die Form einer Kugelschicht, - der Verlauf der Magnetkraft (F_{M}) über den Ventilöffnungshub (h) hat eine negative Steigung, die betragsmäßig geringer ist als diejenige des Federkraftverlaufs.

2. Ventil nach Anspruch 1, dadurch gekennzeichnet, daß das Schließglied (37) an einem Stößelabschnitt (38) ausgebildet ist, dessen Durchmesser (D₃) wenigstens annähernd dem Dichtdurchmesser (D₂) des Ventilsitzes (28) entspricht.

3. Ventil nach Anspruch 1, dadurch gekennzeichnet, daß der Ventilsitz (28) in einem wenigstens dem Zweifachen des Dichtdurchmessers (D₂) des Ventilsitzes entspechenden Durchmesser (D₄) frei ausläuft.

4. Ventil nach Anspruch 2, dadurch gekennzeichnet, daß der Stößelabschnitt (38) nach einer wenigstens dem Dichtdurchmesser (D₂) des Ventilsitzes (28) entsprechenden Länge (L) an einem Übergangsabschnitt (39) mit dem Ventilsitz entsprechender Konizität endet.

5. Ventil nach Anspruch 1, dadurch gekennzeichnet, daß der Stößel (20) eine aufgepreßte Hülse (21) trägt, welche eine Stützfläche (24) für die Rückstellfeder (23) aufweist.

## Claims

1. Electromagnetically operated valve (10), in particular for hydraulic brake systems of motor vehicles, having the following features:
- a seating valve (53) is provided between a hydraulic fluid inlet (26) and a hydraulic fluid outlet (33),
- the seating valve (53) has a closing member (37) and a hollow conical valve seat (28) into which there opens centrally a feed bore (29) which is connected to the hydraulic fluid inlet (26) and has a diameter (D₁) corresponding virtually to the sealing diameter (D₂) of the valve seat,
- the closing member (37) is constructed with a sharp-edged transition on the end face of a stem (20),
- the stem (20) is acted upon by a magnet armature (19) acting in a closing fashion on the seating valve (53), and by a resetting spring (23) acting in an opening fashion at least indirectly,
- the force (F_{F}), produced by the resetting spring (23), on the closing member (37) is set in such a way that it has a monotonically falling characteristic with an increasing valve opening stroke (h),
- the magnetic circuit of the valve (10) is constructed in such a way that the magnetic force (F_{M}) exerted on the magnet armature (19) and transmitted onto the closing member (37) can be varied continuously and has a monotonically falling characteristic with an increasing valve opening stroke (h),
- the magnet armature (19) is arranged in a valve dome (14) which is connected to the hydraulic fluid outlet (33) in a fashion conducting hydraulic fluid,
- the stem (20) has a longitudinal bore (42) which proceeds from the closing member (37) and in which a pin (46), which is supported at least indirectly on a wall of the valve dome (14) and can be moved longitudinally, is held in a largely pressure-tight fashion, the cross section of which pin corresponds at least approximately to the cross section of the feed bore (29),
characterized by the further features:
- the taper angle (α) of the valve seat (28) is at most 90°,
- the closing member (37) has the form of a spherical coating,
- the characteristic of the magnetic force (F_{M}) against the valve opening stroke (h) has a negative gradient which is smaller in absolute value than that of the spring force characteristic.

2. Valve according to Claim 1, characterized in that the closing member (37) is constructed on a stem section (38) whose diameter (D₃) corresponds at least approximately to the sealing diameter (D₂) of the valve seat (28).

3. Valve according to Claim 1, characterized in that the valve seat (28) runs out freely at a diameter (D₄) corresponding at least to twice the sealing diameter (D₂) of the valve seat.

4. Valve according to Claim 2, characterized in that after a length (L) corresponding at least to the sealing diameter (D₂) of the valve seat (28), the stem section (38) ends at a transition section (39) with a conicity corresponding to the valve seat.

5. Valve according to Claim 1, characterized in that the stem (20) bears a press-on sleeve (21) which has a support surface (24) for the resetting spring (23) .

## Revendications

1. Vanne (10) à commande électromagnétique, en particulier pour des installations hydrauliques de freinage de véhicules à moteur,présentant les particularités suivantes :
• on prévoit une vanne à siège (53) entre un orifice d'entrée (26) de l'agent sous pression et un orifice de sortie (33) de l'agent sous pression,
• la vanne à siège (53) a un organe d'obturation (37) et un siège de vanne en forme de cône creux (28) dans lequel débouche, au centre, un alésage d'alimentation (29) qui est en liaison avec l'orifice d'entrée (26) de l'agent sous pression, avec un diamètre (D₁) qui correspond presque au diamètre de fermeture étanche (D₂) du siège de vanne.
• l'organe d'obturation (37) est constitué avec une transition à bords vifs sur le côté frontal d'un poussoir (20),
• sur le poussoir (20) viennent en prise un induit d'aimant (19) qui agit dans le sens de la fermeture sur la vanne à siège (53), et au moins indirectement un ressort de rappel (23) qui opère dans le sens de l'ouverture,
• la force (F_{F}) qui provient du ressort de rappel (23) est ajustée sur l'organe d'obturation (37) d'une manière telle qu'elle présente une évolution qui décroît de façon monotone quand la course d'ouverture (h) de la vanne augmente,
• le circuit magnétique de la vanne (10) est constitué d'une manière telle que la force magnétique (F_{M}) exercée sur l'induit d'aimant (19) et transmise à l'organe d'obturation (37) puisse être modifiée de façon continue et présente une évolution qui décroît de façon monotone quand la course d'ouverture (h) de la vanne augmente,
• l'induit d'aimant (19) est disposée dans un dôme de vanne (14) qui est en liaison, en faisant passer l'agent sous pression, avec l'orifice de sortie d'agent sous pression (33),
• le poussoir (20) a un alésage longitudinal (42) qui part de l'organe d'obturation (37), alésage longitudinal dans lequel une tige (46) qui prend appui au moins indirectement sur une paroi du dôme de vanne (14) et qui peut se déplacer dans le sens de la longueur, est logée d'une manière largement étanche à la pression, alésage dont la section transversale correspond au moins à peu près à la section transversale de l'alésage d'alimentation (29),
caractérisé par les autres particularités suivantes :
• l'angle de conicité (α) du siège de vanne (28) atteint au plus 90°,
• l'organe d'obturation (37) a la forme d'une couche sphérique,
• l'évolution de la force magnétique (F_{M}) en fonction de la course d'ouverture (h) de la vanne a une pente négative plus faible que celle de l'évolution de la force du ressort.

2. Vanne selon la revendication 1,
caractérisée en ce que
l'organe d'obturation (37) est constitué sur une section (38) du poussoir dont le diamètre (D₃) correspond au moins à peu près au diamètre de fermeture étanche (D₂) du siège de vanne (28).

3. Vanne selon la revendication 1,
caractérisée en ce que
le siège de vanne (28) a une sortie libre sur un diamètre (D₄) qui correspond au moins au double du diamètre de fermeture étanche (D₂) du siège de vanne.

4. Vanne selon la revendication 2,
caractérisée en ce que
la section de poussoir (38) après une longueur (L) qui correspond au moins au diamètre de fermeture étanche (D2) du siège de vanne (28), se termine avec une conicité qui correspond au siège de vanne.

5. Vanne selon la revendication 1,
caractérisée en ce que
le poussoir (20) porte un manchon (21) qui est pressé dessus et qui présente une surface d'appui (24) pour le ressort de rappel (23).
